# EUROPEAN PATENT SPECIFICATION

(11) **EP 1 474 608 B1**
(45) Date of publication and mention of the grant of the patent: **01.10.2008**
(21) Application number: 03707693.2
(22) Date of filing: 04.02.2003
(51) Int. Cl.: B01F 3/08, B01F 5/04

(54) **DISPOSAL OF WASTE FLUIDS**
ENTSORGUNG VON ABFALLFLUIDEN
ELIMINATION DE DECHETS FLUIDES

(30) Priority: 04.02.2002 US 354382 P
(43) Date of publication of application: 10.11.2004
(73) Proprietor: Wader, LLC, Laguna Beach, CA 92651 (US)
(72) Inventor: FINLEY, Warren, Laguna Beach, CA 92651 (US); PSCHEIDT, Edward, Laguna Hills, CA 92653 (US); JONES, Anthony, T., San Francisco, CA 94111 (US); DOLBEAR, Geoffrey, E., Diamond Bar, CA 91765 (US)
(74) Representative: Madgwick, Paul Roland
(86) International application number: PCT/US2003/003242
(87) International publication number: WO 2003/067082

(56) References cited:
- WO-A-00/53924
- US-A- 5 106 230
- US-A- 6 100 600
- US-B1- 6 348 148

## Description

### Field and Background of the Invention

In many human activities, it is necessary to dispose of waste fluids and/or waste products in fluid, and this is sometimes achieved by mixing such waste fluids into a larger body of water. An excellent example this type of waste fluid disposal can be seen in the disposition of salty brines which are generated as a product of seawater desalinization processes. These salty brines are typically pumped back into the ocean, where they tend to settle to the bottom and collect in large pools without being dispersed into the wider body of water.

In this specification, the term "waste fluid" should be interpreted so as to include not only fluids, but also fluids containing solid or particulate matter therein.

Other examples include (1) disposal of brines co-produced with petroleum in the production of crude oil on offshore platforms, (2) disposal of water-based drilling fluids from offshore oil platforms, (3) disposal of treated liquid wastes from ships and drilling platforms, and (4) disposal of salty liquids in freshwater lakes such as is done with sewer outfalls for large cities around the Great Lakes of North America. These are just a representative listing of examples where waste fluid disposal is required, but there are, of course, many others.

While it might be thought that these waste streams can simply be "poured over the side," or just disposed of by simply pouring them into the larger body of water without mixing, workers who must deal with these waste fluids have long recognized that the wastes are slow to mix with the surrounding water, or indeed may never fully be integrated except in the very long term. They tend, rather, to form pools where there is no current to move them or long tails when there is a current.

One way to address this problem is to install pumping and mixing equipment to dilute the waste streams with large volumes of water. Such a solution can, in theory, be used, but the costs are too high. The mixing equipment is expansive, especially when constructed so as to deal with an resist corrosive salt water in the ocean. The greater expense, however, is often the large consumption of energy which is required to move the large volumes of liquid and mix them thoroughly.

### Summary of the Invention

The present invention relates to disposal of waste fluids, and, in one aspect, concomitant hydraulic power generation systems, which efficiently exploit the osmotic energy potential between two bodies of fluids or water having different salinity concentrations.

The absorbed energy from the sun in the water cycle causes a concomitant increase in the latent energy or enthalpy of the evaporated water. While most is dissipated as heat in the atmosphere, there is non-dissipated stored energy, the so-called "free energy of mixing" (or "heat of mixing") of fresh water into sea water. The free energy of mixing reflects an increase in entropy of water (or other solvent) when it is transformed from a pure or fresh-water state to a diluted or salt-water state. Solvents such as water have a natural tendency to migrate from an area of relatively low solute concentration (lower entropy) to an area of relatively high solute concentration (higher entropy). Thus, an entropy gradient is created whenever two bodies of water or other solvent having differing solute concentrations are brought into contact with one another and begin to mix. This entropy gradient can be physically observed and measured in the well-known phenomena known as osmosis.

It is an important aspect of this invention to provide a simple, low cost method of dispersing waste fluids into a larger body of water. It is another aspect of this invention to provide a dispersing method that does not consume energy. It is a third aspect to provide a method that can recover useful power from the thermodynamic driving force that leads to mixing of fluids of different compositions.

Advantageously, the method and apparatus of the present invention do not require the use of a semi-permeable membrane or other specially formulated material, nor does it require heating or cooling of the waste fluids or (salt) water solution. The present invention may effectively mix and recover energy when using a wide variety of waste fluids, including but not limited to salty brines, treated or untreated river run-off, treated waste-water run-off or effluent, storm-drain run-off, and/or partly contaminated fresh water run-off. Thus, the present invention is well suited to large scale waste disposal by mixing and, optionally, power production in a wide variety of geographic locations and under a wide variety of conditions.

In accordance with one embodiment the present invention provides a method for turbulently mixing different miscible fluids utilizing the differences in osmotic potential between them. In one embodiment, relatively low salinity fluid is conducted through a first tube. The relatively low salinity fluid is then directly contacted with the relatively high salinity water in an enclosed second tube to form a mixture. The second tube is in fluid communication with the source of relatively high salinity water through one or more openings. The contacting of the different salinity fluid and water causes upwelling of the mixture within the second tube. This causes significant mixing. The mixture may then be passed through a power generation unit to generate mechanical and/or electrical power.

The system may, in one embodiment, comprise an up tube located in the source of relatively high salinity water. The up tube is fluidly connected to the source of relatively high salinity water through one or more openings in the up tube at a first depth. The up tube terminates at a depth in the source of relatively high salinity water at a second depth less than the first depth. A down tube is provided having a first end connected to the source of relatively low salinity fluid and a second end which discharges the low salinity fluid from the source of relatively low salinity fluid into the up tube such that the relatively low salinity fluid and the relatively high salinity water form a mixture which upwells within the up tube. A means may be provided for generating power from the rising mixture.

The invention also comprises the apparatus and methods described above, but wherein the waste fluid has the higher density than the large body of water in which it is mixed, and the direction of flow of the mixture resulting from the osmotic potential differences is reversed.

### Brief Description of the Drawings

FIG. 1A is a schematic diagram representation of a conventional forward osmosis process through a semi-permeable membrane;
FIG. 1B is a schematic diagram representation of a conventional reverse osmosis process through a semi-permeable membrane;
FIG. 2 is a schematic representation of a tube upwelling apparatus for use in accordance with one embodiment of the present invention where the waste fluid has lower density;
FIG. 3 is a schematic representation of a tube upwelling apparatus for use in accordance with another embodiment of the present invention where the waste fluid has higher density;
FIG. 4 is a schematic representation of one embodiment of a waste fluid mixing device having features and advantages in accordance with the present invention;
FIG. 5 is a schematic representation of an alternative embodiment of a waste fluid mixing device having features and advantages in accordance with the present invention;
FIG. 6 is a schematic representation of a further alternative embodiment of a waste fluid mixing device having features and advantages in accordance with the present invention;
FIG. 7A is a schematic representation of a further alternative embodiment of a waste fluid mixing device having features and advantages in accordance with the present invention;
FIG. 7B is a side view of the up tube of FIG. 7A, showing the slots in the side of the up tube;
FIG. 7C is a sectional view from below of the shaft support of FIG. 7A;
FIG. 7D is a sectional view from above of the vane drum of FIG. 7A;
FIG. 8A is a schematic representation of a further alternative embodiment of a waste fluid mixing device having features and advantages in accordance with the present invention; FIG. 8B is a side view of the up tube of FIG. 8A showing two sets of slots in the side of the up tube;
FIG. 8C is a sectional view from below of the shaft support of FIG. 8A;
FIG. 8D is a sectional view from above of the vane drum of FIG. 8A;
FIG. 9A is a schematic view of an up tube with an open lower end with an alternative embodiment of a down tube having a plurality of holes in the sides and the outlet end, having features and advantages in accordance with the present invention;
FIG. 9B is a sectional view from below of the up tube and the outlet end of the down tube of FIG. 9A;
FIG. 10A is a schematic view of an up tube with an open lower end with an alternative embodiment of the down tube with a plurality of secondary down tubes having holes in the sides and the outlet end, having features and advantages in accordance with the present invention;
FIG. 10B is a sectional view from below ofthe up tube and the outlet end of the down tube of FIG. 10A showing the plurality of secondary down tubes and the holes on the outlet ends of the secondary down tubes;
FIG. 11 is a schematic view of an up tube with an open lower end with an alternative embodiment of the down tube with a plurality of secondary down tubes, having features and advantages in accordance with the present invention.;
FIG. 12 is a schematic view of a down tube with a rotating hub and spoke outlets with no up tube;
FIG. 13 is a schematic view of a down tube with a rotating hub and spoke outlets with an up tube, having features and advantages in accordance with the present invention;
FIG. 14 is a schematic view of a portion of an up tube comprising a plurality of concentric up tubes, having features and advantages in accordance with the present invention;
FIG. 15 is a schematic representation of a modified up tube having features and advantages in accordance with the present invention;
FIG. 16 is a schematic illustration of a possible large-scale commercial embodiment of a waste fluid mixing device having features and advantages in accordance with the present invention;
FIG. 17 is a cutaway view of the turbine and generator assembly of the waste fluid mixing device of FIG. 12;
FIG. 18 is a schematic view of an up tube with an open lower end, with an alternative embodiment of the rotating down tube, extending substantially into the up tube, and having holes and turbines mounted thereon, having features and advantages in accordance with the present invention;
FIG. 19A is a schematic view of an up tube with a closed lower end, with an alternative embodiment of the rotating downtube, extending substantially into the up tube, and having holes and turbines mounted thereon, having features and advantages in accordance with the present invention;
FIG. 19B is a side view of the up tube shown in Figure 19A;
FIG. 20 is a schematic view of an up tube with an open lower end, with an alternative embodiment of the rotating downtube, extending substantially into the up tube, and having holes and turbines mounted thereon, with rotating up tube and down tube, having features and advantages in accordance with the present invention;
FIG. 21 is a schematic view of an up tube upwelling apparatus in accordance with the present invention wherein a rotating helical screw is used to generate the power instead of a plurality of fan blades, having features and advantages in accordance with the present invention;
FIG. 22A is a side view of an alternative embodiment of a fan blade used in accordance with the present invention; and
FIG. 22B is a schematic view showing the under portion of the fan blade illustrated in Figure 22A of the drawings.

### Description of the Preferred Embodiments

As discussed in the Background section above, when solvent fluids having differing osmotic potentials are contacted, mixing ofthe fluids takes place and energy is released. This released energy results when a fluid is transformed from its original state to its diluted state with salt-water. Thus, an entropy gradient is created whenever two bodies of fluid having differing solute concentrations are brought into contact with one another and begin to mix. This entropy gradient can be physically observed and measured in the well-known phenomena known as osmosis.

Because the term "osmosis" is associated with a membrane, the term "hydrocrasis" is used as a term for the situation when solvent fluids having differing osmotic potentials are contacted and mixed with each other in the absence of a membrane.

Aqueous waste liquids, such as salty brines generated as a byproduct of desalinization of sea water, are mixed with sea water in a hydrocratic generator such as that described in U.S. Patent No. 6,313,545, which is incorporated herein by reference. This generator, as described in the patent, is capable of continuously mixing more than 30 volumes of seawater with each volume of fresh water fed to the generator, while generating power for other uses.

When applied to waste liquids with densities lower than seawater, the mixing is carried out in the generator as described in U.S. Patent No. 6,313,545. The waste liquid is led through a first pipe or hose (the feed tube) into the bottom opening of a larger diameter second pipe (the mixing tube) hanging vertically in the seawater. The waste fluids leaving the feed tube flow upward through the mixing tube entraining and mixing with a larger volume of sea-water and creating a large volume of mixed liquid that flows out of the top of the mixing tube.

Mixing occurs due to the well-known thermodynamic driving force for miscible liquids of different compositions to mix with one another. Because the two liquids are moving, fluid dynamics behavior will set-up the turbulent conditions that provide the mechanism for the liquids to mix rapidly and efficiently. Power can be generated from the combined flow of the mixed liquids by incorporating an appropriate turbine assembly within the mixing tube. The spinning of the turbine blades can be harnessed to turn a dynamo.

When applied to waste liquids with densities higher than sea water, mixing is carried out as described for lower density liquids except that the higher density liquids are led through the feed tube into the top opening of the larger diameter mixing tube. Now the net flow is downward, driven by the density. Again, because of the tendency of the liquids to mix, a larger volume of seawater will be drawn into the open upper end of the mixing tube. The mixed combined flow will emerge from the open lower end of the mixing tube. Again, power can be generated from the combined flow using an appropriate turbine assembly.

When applied to some waste streams, it may be desired to mix some additive into the waste. An example of such an additive is hydrogen peroxide, added in small amounts as a disinfectant or to enhance oxidation of dissolved organic materials. Another example of such an additive is a small portion of an active microbial culture to digest trace organic compounds. Other such additives will be obvious to those skilled in the art. Such an additive can be injected into the smaller waste stream before mixing or into the combined waste stream flowing through the mixing tube. The mixing occurring in the hydrocratic generator ensures that the additive will be well dispersed in the combined liquid product.

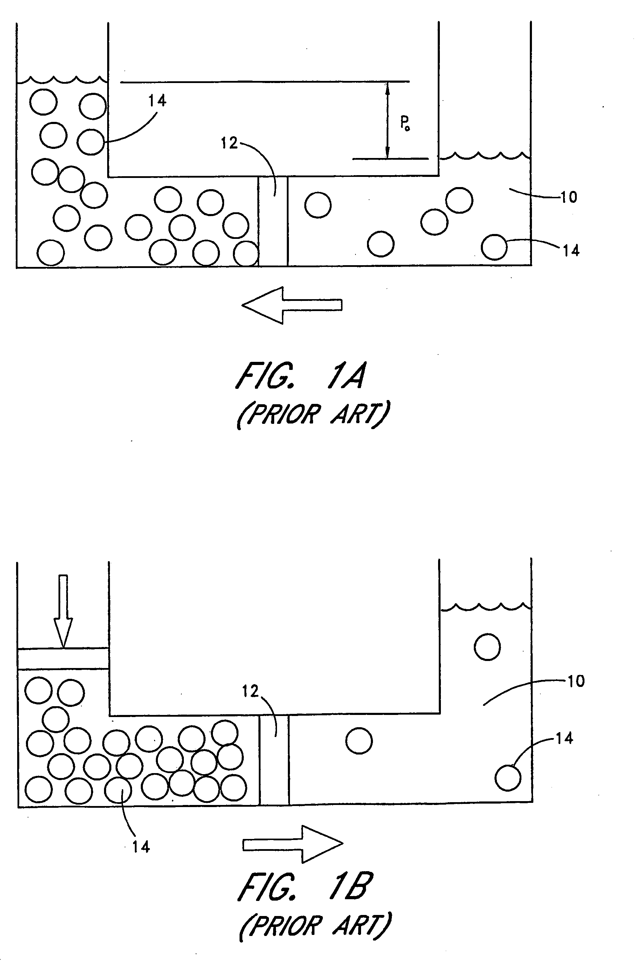

FIG. 1A schematically illustrates conventional forward osmosis through a semi-permeable membrane. Forward osmosis results in the flow of water 10 (or other solvent) through a selectively permeable membrane 12 from a lower concentration of solute 14 to a higher concentration of solute 14. FIG. 1B illustrates the condition of reverse osmosis whereby water (or other solvent) 10 under the influence of external pressure is forced through a selectively permeable membrane 12 from a higher concentration of solute 14 to a lower concentration of solute 14, thus squeezing out or extracting the pure solvent 10 from the solute 14. Reverse osmosis is widely used in water purification and desalinization plants throughout the world. Reverse osmosis consumes work energy.

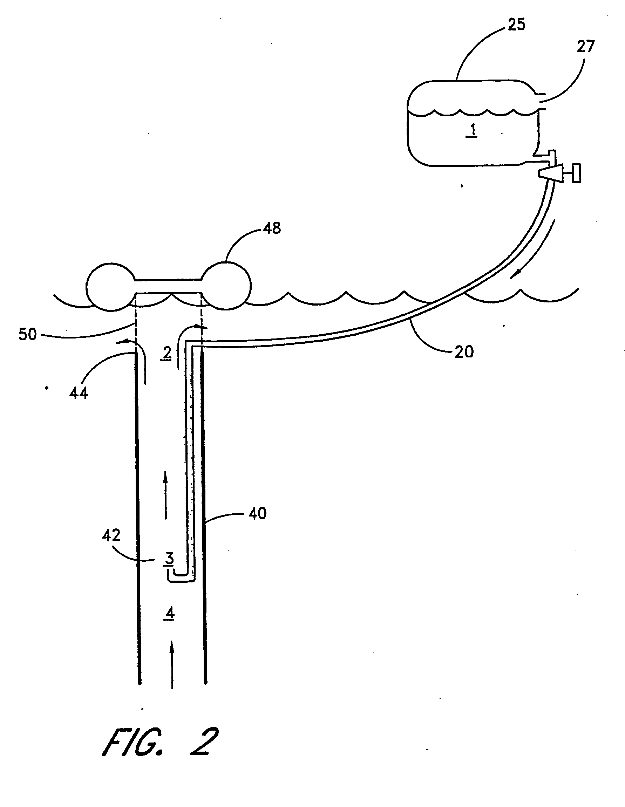

A schematic representation of an apparatus for disposing waste fluids by mixing such fluids into a larger body of fluid such as seawater is illustrated in Figure 2 of the drawings. the apparatus is constructed using suitable corrosion resistant materials. In this schematic illustration, the ocean, or indeed any other large body of water or fluid, is represented by space 28 and has a upper surface 30. An up tube 40 is provided, and may comprise a polyvinylchloride (PVC) tube. The dimensions of the up tube 40 will, in practice, vary widely depending on the circumstances. Larger dimensions will be necessary to dispose of increased volumes of waste fluid, and vice versa. As a illustrative example only, the up tube 40 may have a 15 cm (6 inch) inside diameter (i.d.) and be about 1.5 meters long. In some embodiments, as will be discussed below, the top of the up tube 40 may be left open and unobstructed, as illustrated in Figure 2. In other applications, as will be discussed, a turbine may be attached to the top of the up tube 40 to convert kinetic flow energy into mechanical work energy. The down tube 20 may be a 1.8 cm (1/2inch) i.d. (PVC) tube 1 meter long. Two 90°degree elbows and a short piece of pipe were attached to the end of the down tube 20 so that the waste fluid was caused to exit upwards into the up tube 40 from the down tube 20. The apparatus may be attached, for example, to a float 48 by nylon support cables 50, and the outlet end 44 of the up tube 40 may be positioned about 15 cm below the surface 30 of the salt water.

In the illustrative example of Figure 2, the down tube 20 is connected to a reservoir 25 which contains the waste fluid to be disposed in the large body of water 28.. The reservoir 25 is preferably kept at a constant level by continually filling with waste fluid and allowing the excess to flow out the spill-way 27 so that the flow rate of waste fluid through the down tube 20 is kept essentially constant.

The down tube 20 is filled with waste fluid to eliminate air bubbles. The height of the reservoir may then be adjusted to establish a pressure head that determines the rate of flow of waste fluid in the down tube 20. The waste fluid then flows from the reservoir 25 through the down tube 20 and introduced into the lower portion of the up tube 40.

FIG. 2 shows four reference points in the apparatus: Point 1 is the waste fluid reservoir; Point 2 is at the outlet end 44 of the up tube 40; Point 3 is immediately above the outlet end 24 of the down tube 20; and Point 4 is inside the up tube 40 below the outlet end 24 of the down tube 20.

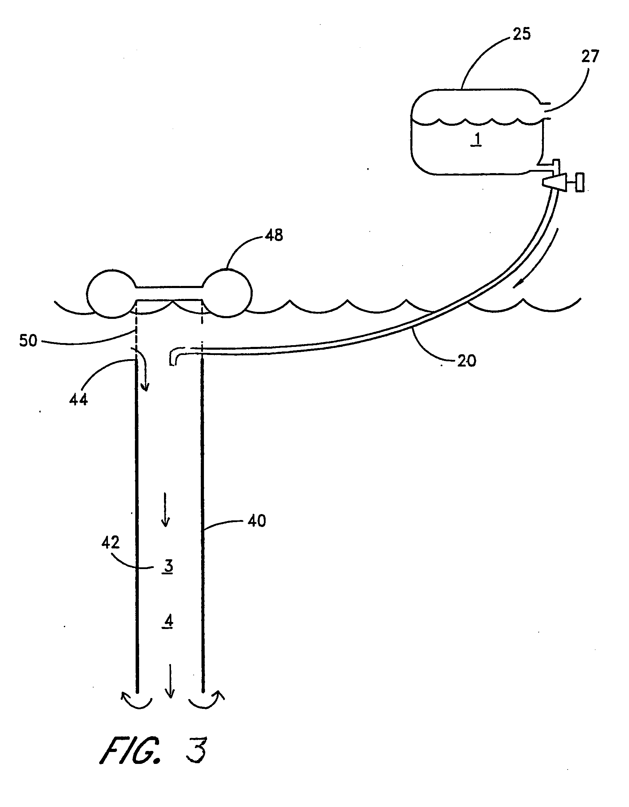

FIG. 3 shows an embodiment ofthe invention wherein the density of the waste fluid is higher than that of the surrounding body of water. FIG. 3 shows the down tube 20 opening at the top of the up tube 40, and the higher density waste fluid and lower denisty water flow downward as indicated by the arrows.

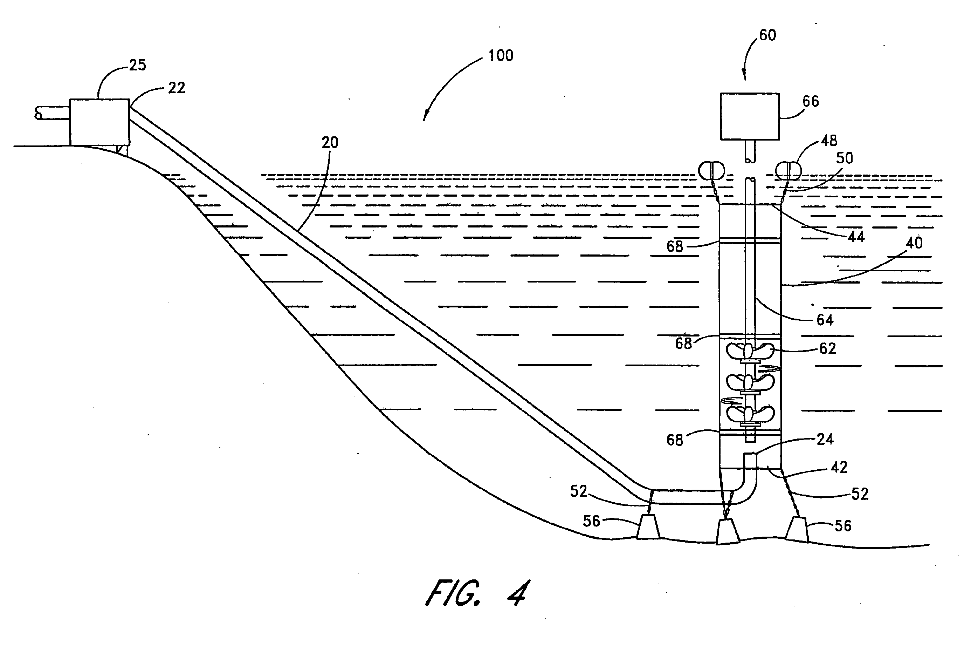

FIG. 4 is a simple schematic illustration of one possible embodiment of a waste fluid disposal device 100. The device 100 generally comprises a down tube 20, an up tube 40, and a power plant generator 60. The particular device illustrated in FIG. 4 may be adapted for either large-scale deep water applications or for relatively small-scale or intermediate-scale fluid waste disposal and power generation facilities in shallow coastal waters, as desired. For example, the depth of water illustrated in FIG. 4 may be 10 to 50 meters or more, with the up tube 40 being 1-5 meters in diameter.

In a preferred embodiment, waste fluid is introduced into the down tube 20 in order to power the device. The waste fluid input stream may be conducted though the down tube 20 by applying pressure at the inlet end 22 of the down tube 20. The pressure may be provided by a pumping station or with a hydrostatic head pressure resulting from a fluid reservoir at a higher elevation. The pressure applied at the inlet end 22 of the down tube 20 need only be high enough to overcome the hydrostatic head at the outlet end 24 of the down tube 20.

When waste fluid is introduced into the down tube 20, sea water flows into the up tube 40, causing upwelling in the up tube 40 that can be used to mix in with the waste fluid and generate power with the power generator 60. Some of this upwelling effect is due to the increased buoyancy of the waste fluid in the up tube 20, because the waste fluid has a lower density than sea water. Further, the apparatus and the method may also harness the energy available from the different osmotic potentials of the waste fluid and sea water. The amount of upwelling, mixing and power that is generated in the device depends in part on the particular dimensions of the up tube 40 and the down tube 20 and the flow rate of waste fluid in the down tube 20.

As shown in FIG. 4, the down tube 20 has an inlet end 22 and an outlet end 24. The inlet end 22 is connected to a supply 25 of waste fluid. The outlet end 24 of the down tube 20 is open such that the waste fluid discharges through the outlet end 24 of the down tube 20 into the up tube 40. In alternative embodiments the outlet end 24 ofthe down tube 20 may be connected to an intermediate mixing chamber (not shown) which then discharges into the up tube 40.

Although the down tube 20 may be any of a variety of diameters, one criterion is to choose a diameter for the down tube 20 which minimizes the resistance to fluid flow through the down tube 20. Resistance to flow through a tube decreases as the diameter of the tube increases. Choosing a large diameter for the down tube 20 therefore minimizes the resistance of the tube for a given flow rate.

Another criterion in choosing the diameter of the down tube 20 is to maximize the amount and efficiency of the mixing process and the power generated by the power generator 60. When the diameter of the down tube 20 exceeds a certain value relative to the up tube 40, the efficiency of power generation declines as the diameter ofthe down tube 20 is increased further. There is therefore an optimum in the ratio ofthe diameter of the down tube 20 relative to the diameter of the up tube 40, and therefore the ratio of the area of the down tube 20 relative to the area up tube 40, in order to maximize the efficiency of power generation.

In the embodiment of the apparatus shown in FIG. 4, the outlet end 24 of the down tube 20 is located inside the up tube 40. In this embodiment, the outlet end 24 of the down tube 20 is preferably oriented so that the outlet end 24 of the down tube 20 points upward.

The up tube 40 has a lower end 42 and an outlet end 44. In the embodiment of FIG. 4, both the lower end 42 and the outlet end 44 of the up tube 40 are open. In other embodiments, the lower end 42 of the up tube 40 may contain vanes or other means of directing fluid flow.

Although the diameters of the lower end 42 and the outlet end 44 of the embodiment of the up tube 40 shown in FIG. 4 are equal, the lower end 42 and the outlet end 44 ofthe up tube 40 may have different diameters in other embodiments. For example, the up tube may be positively or negatively tapered to form a nozzle or diffuser. Alternatively, the up tube 40 can have a necked-down portion to form an accelerated flow there-through.

In the embodiment of FIG. 4, the outlet end 44 of the up tube 40 is attached to a flotation system for locating the up tube 40 at a predetermined depth. Other means of locating the up tube 40 at a predetermined depth may also used in place of the flotation system. The flotation system shown in FIG. 4 comprises one or more floats 48 and one or more support cables 50. The floats 48 may be formed of Styrofoam®, or it may comprise a plurality of individual air bags, drums, or any other suitable material capable of producing buoyancy.

In some embodiments, the lower end 42 of the up tube 40 is attached to mooring cables 52. The mooring cables 52 extend from the lower end 42 of the up tube 40 to anchors 56 fixed on the sea floor. The mooring cables 52 and the anchors 56 retain the up tube 40 in a predetermined location on the sea floor. The lifting force of the float 48 transmitted through support cables 50 retains the up tube 40 at a desired predetermined vertical orientation. The down tube 20 is also attached to mooring cables 52 which extend to anchors 56 on the ocean floor. The mooring cables 52 and anchors 56 hold the down tube 20 in place. The down tube 20 is arranged so that it discharges the waste fluid into the up tube 40.

Increasing the diameter of the up tube 40 increases the amount of upwelling in the up tube 40 and therefore increases mixing effect and power production. However, increasing the diameter of the up tube 40 increases both the size and the cost of the apparatus. Further, increasing the area of the up tube 40 allows the use of a down tube 20 with a greater area without losing efficiency. The ratio of the area of the down tube 20 to the area of the up tube 40 is therefore the parameter which is to be optimized rather than the diameter of either the up tube 40 or the down tube 20 alone.

The down tube 20 and the up tube 40 are preferably not subjected to excessively high pressures. In the embodiment shown in FIG. 4, the up tube 40 contains the sea water entering from the lower end 42 of the up tube 40 and the waste fluid discharges from the outlet end 24 of the down tube 20. Because the up tube 40 is operated at low pressures, the up tube 40 can preferably be constructed of relatively inexpensive and lightweight materials such as plastic, PVC, lightweight concrete, and the like. The down tube 20 may be subjected to higher pressures than the up tube 40, although typically small. Thus, inexpensive materials can be used for both the up tube 40 and the down tube 20. Suitable materials include polyvinyl chloride (PVC), fiberglass, polyethylene (PE), polypropylene (PP), concrete, gunite, and the like. Alternatively, other materials such as stainless steel or titanium may also be used. Because the up tube 20 and the down tube 40 are generally exposed to water ofrelatively high salinity, it may be preferable to form the down tube 20 and the up tube 40 from materials resistant to corrosion from salt water. If stainless steel is chosen as a material of construction, it is preferable to select an alloy of stainless steel which is resistant to corrosion by salt water.

The outlet end 44 ofthe up tube 40 may extend to or above the surface ofthe sea or may be located at any depth beneath the surface of the sea. In one embodiment, the outlet end 44 of the up tube 40 is located in the photic zone so as to bring nutrient-rich deep-sea water to the photic zone to enhance growth of the organisms in the photic zone through mariculture.

The length ofthe up tube 40 may vary, depending on a variety of factors. The length is preferably sufficient to allow complete mixing of the waste fluid with the salt water, but not so long as to cause unnecessary drag on the water flow. The optimal length will be determined as that which allows optimal mixing and/or power production for a given range of input waste fluid flow rates. The length ofthe up tube 40 may also be chosen based on a desire to facilitate mariculture, the promotion of growth of organisms in the sea by transfer of nutrients from nutrient-rich depths to the nutrient-poor water at lesser depths.

The power generator 60 generates electricity from the waste fluid/water mixture flow inside the up tube 40. FIG. 4 shows one simplified form of a power generator 60 comprising one or more turbines or propellers 62 attached to a shaft 64. The shaft 64 is connected to an electrical generator 66. When waste fluid/water mixture upwells in the up tube 40, the upwelling turns the propellers 62, which in turn rotate the shaft 64 to drive the electrical generator 66, thereby generating power. One or more shaft supports 68 may be provided to support the shaft 64 to minimize wobbling of the shaft 64 while the upwelling water turns the one or more propellers 62 attached to the shaft 64.

The propellers 62 on the shaft 64 may be inside the up tube 40, above the outlet end 44 of the up tube 40, or both inside the up tube 40 and above the outlet end 44 of the up tube 40. In the embodiment of FIG. 4, the propellers 62 are located inside the up tube 40 below the middle shaft support 68. Similarly, the electrical generator 66 may be conveniently located above or below the surface of the water in which the up tube 40 is located. In the embodiment shown in FIG. 4, the electrical generator 66 is located above the surface of the water in order to minimize maintenance expense.

The embodiment shown in FIG 4 can be modified so that the waste fluid is introduced at the top end of the up tube 40, which would, in such a case, become the "down" tube. This arrangement would be used when the waste fluid has a density which is higher than that of the seawater or other body of fluid in which the waste fluid is mixed. In this embodiment, the flow would thus be downward toward the base of the tube 40, where the mixture would exit. Furthermore, the propellers 62 would have a reverse operation so that they are rotated by the downwardly flowing mixture of seawater and waste fluid. Other than the appropriate reversals as described, the structure and operation would be substantially the same as the device shown in FIG. 4 of the drawings.

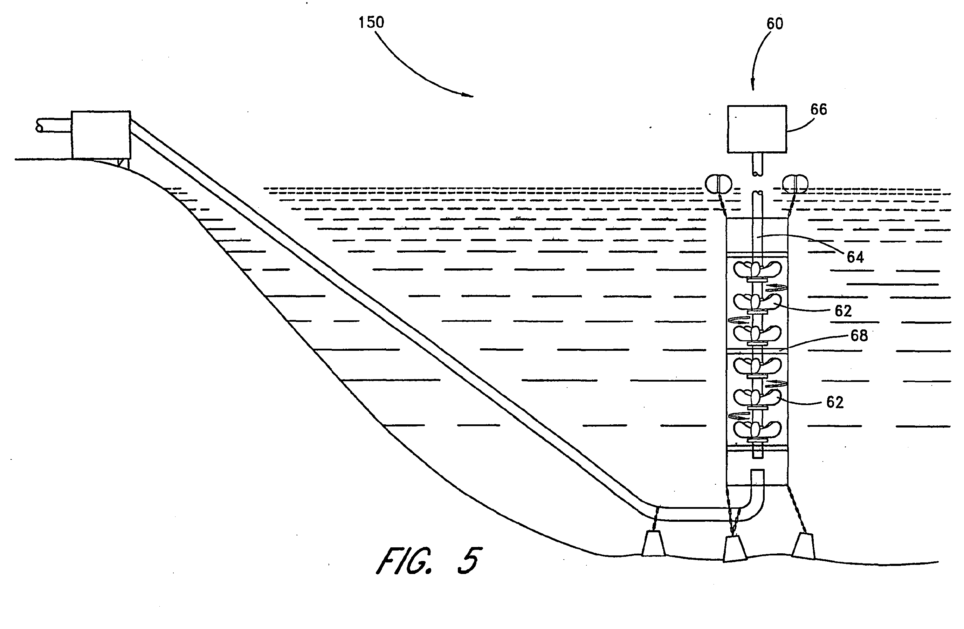

FIG. 5 shows an alternative embodiment of a waste fluid mixing device and power generator 60. In this case, the power generator 60 comprises propellers 62 attached to the shaft 64 both above and below the middle shaft support 68. The shaft 64 is attached to the electrical generator 66, which generates electrical power when the shaft 64 rotates due to the fluid flow in the up tube 40. Structural modifications to account for reversal of flow direction when the waste fluid has a higher density may be made as described with reference to FIG. 4.

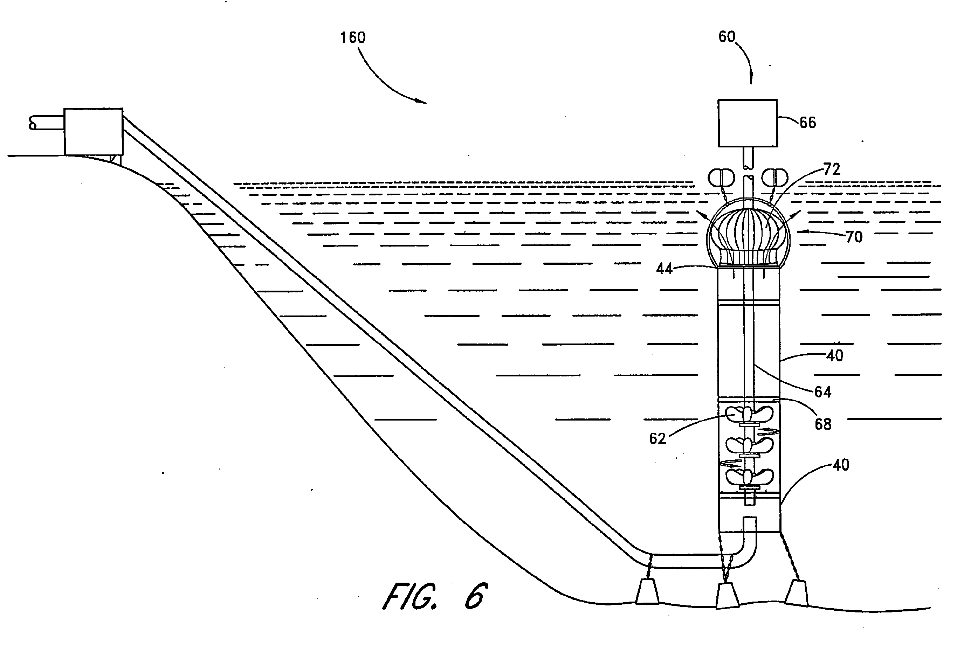

FIG. 6 shows a power generator 60 in which one or more spiral fans 70 are mounted on the shaft 64. Shaft supports 68 may optionally be provided to minimize wobbling of the shaft 64. The one or more spiral fans 70 may be attached to the shaft 64 above the middle shaft support 68, below the middle shaft support 68, or both above and below the middle shaft support 68. One or more spiral fans 70 may be mounted on the shaft 64 on the outlet end 44 ofthe up tube 40. In an alternative embodiment, one or more spiral fans 70 may be mounted both inside the up tube 40 and on the outlet end 44 of the up tube 40. In the embodiment of FIG. 6, the spiral fan 70 is attached to the outlet end 44 of the up tube 40.

The spiral fan 70 comprises a plurality of spiral vanes 72. The fluid mixture flow up the up tube 40 contacts the plurality of spiral vanes 72, turning the one or more spiral fans 70 mounted on the shaft 64, rotating the shaft 64 and driving the electrical generator 66, generating electrical power.

Structural modifications of the device in FIG. 6 to account for reversal of flow direction when the waste fluid has a higher density may be made as described with reference to FIG. 4.

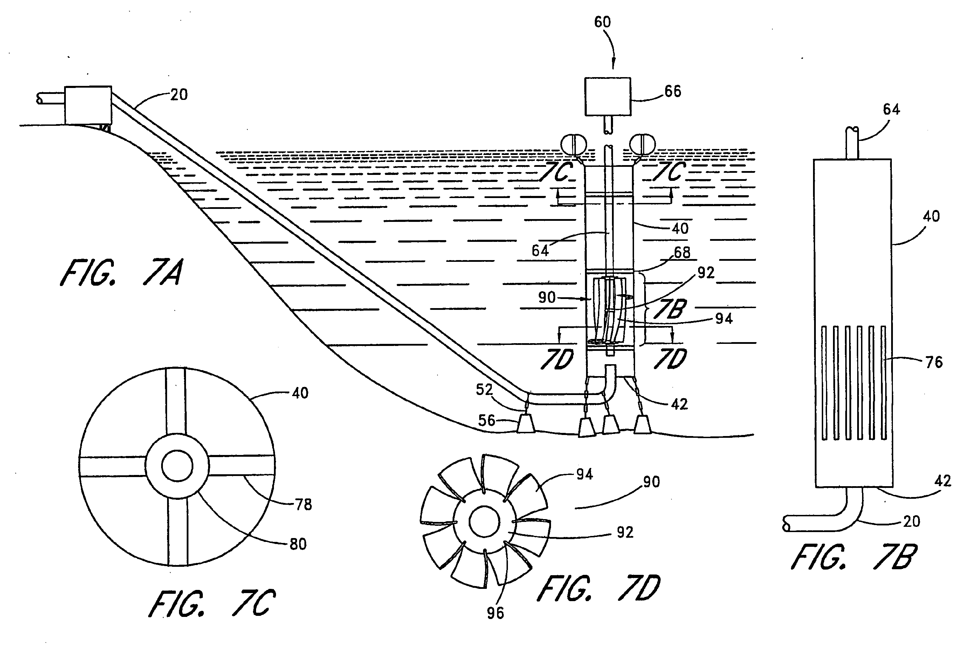

FIG. 7A shows the lower end 42 of the up tube 40 closed. The down tube 20 passes through the closed lower end 42 of the up tube 40. Although FIG. 7A shows that the down tube 20 is attached to one or more mooring cables 5 2 which are attached to anchors 5 6 on the ocean floor, the down tube 20 may also be supported by the closed lower end 42 of the up tube 40. The closed lower end 42 of the up tube 40 of FIG. 7A helps to keep the down tube 20 in position without the need for mooring cables 52 and anchors 56.

The up tube 40 comprises a plurality of slots 76, as shown in FIG. 7B open to the surrounding sea to allow the sea water to enter the up tube 40. One or more shaft supports 68 are attached to the up tube 40. One possible embodiment of a suitable shaft support 68 is shown in FIG. 7C. The shaft support 68 comprises one or more hydrodynamic cross members 78 and a bearing 80. The cross members 78 are attached to the up tube 40 at a first end and to the bearing 80 at a second end, thereby suspending the bearing 80 inside the up tube 40. The bearing 80 can have a variety of designs such as ball bearings, compression bearings, and the like. The cross members 78 are preferably hydro-dynamically shaped so as to not slow down flow in the up tube 40. The shaft support 68 supports the shaft 64, minimizing the wobbling of the shaft 64 when the shaft 64 rotates.

The power generator 60 in FIG. 7A comprises a vane drum 90 inside the up tube 40. The vane drum 90 comprises a plurality of rings 92 connected by a plurality of curved vanes 94. FIG. 7D shows a sectional view of the vane drum 90. Each curved vane 94 is attached by a first edge 96 to each of the plurality of rings 92. The curved vanes 94 form a helical curve when viewed from the side, as shown in FIG. 7A improving the efficiency of energy transfer from the water flow through the slots 76 on the up tube 40 compared to the efficiency of curved vanes 94 which are not oriented with a helical curve. FIG. 7D shows the curved vanes 94 attached to the ring 92 from above as illustrated in FIG. 7A. FIG. 7D also shows the preferred curved surface of the curved vanes 94 as well as the helical orientation of the curved vanes 94 as viewed from above.

The vane drum 90 may be attached to the shaft 64. When the sea water is drawn into the up tube 40 through the slots 76, the incoming water contacts the curved vanes 94, rotating the vane drum 90, which in turn rotates the shaft 64. The rotating shaft 64 turns the electrical generator 66, generating power from the upwelling water in the up tube 40.

Structural modifications of the device in FIG. 7 to account for reversal of flow direction when the waste fluid has a higher density may be made as described with reference to FIG. 4. The top end ofthe tube 40 would be closed and the bottom end open to facilitate downward flow.

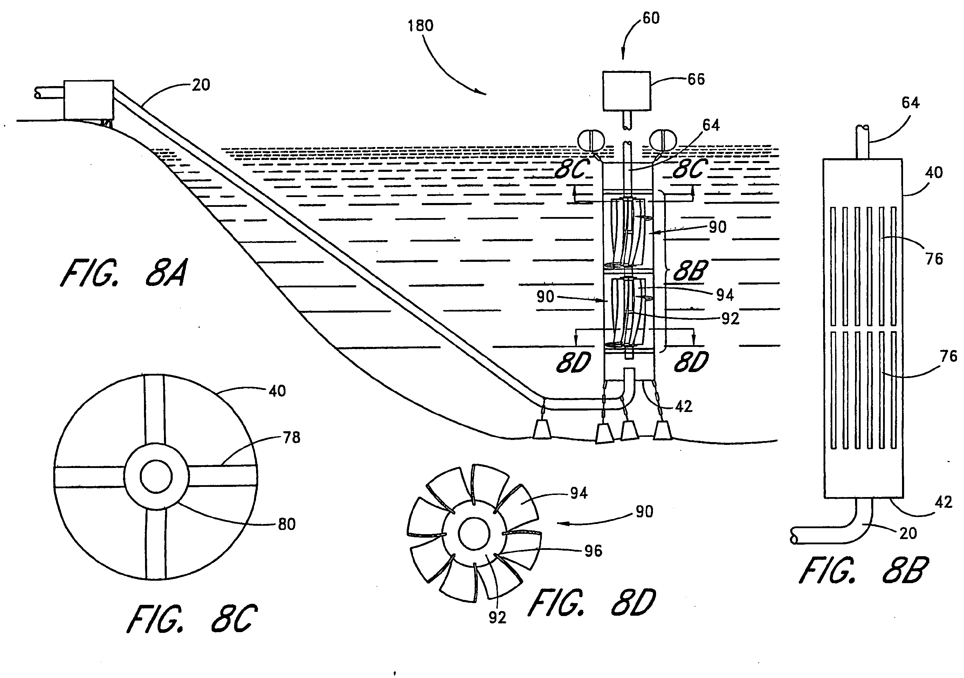

FIG. 8A illustrates two vane drums 90, a first vane drum 90 below the middle shaft support 68 and a second vane drum 90 above the middle shaft support 68. In FIG. 8B, it is seen that there are two sets of slots 76 in the up tube 40 and two vane drums 90. In another embodiment, there are two vane drums 90 as in the embodiment shown in FIG. 8A, but the up tube 40 comprises only a single set of slots 76 in the up tube 40, as in the embodiment of the up tube 40 shown in FIG. 7B. Structural modifications of the device in FIG. 8 to account for reversal of flow direction when the waste fluid has a higher density may be made as described with reference to FIG. 7.

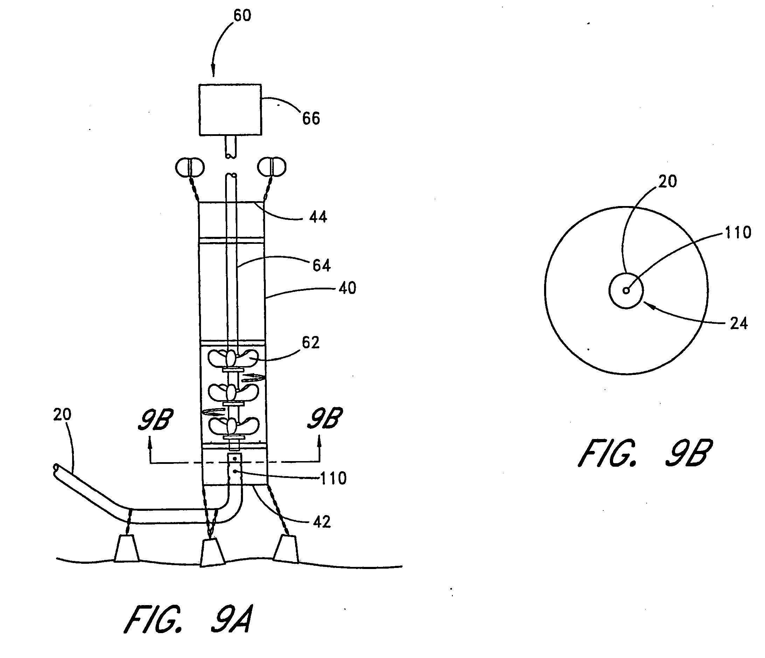

FIG. 9A shows a plurality of holes 110 present in the side of the down tube 20. FIG. 9B shows a view ofthe outlet end 24 ofthe down tube 20 of FIG. 9A sealed except for a single hole 110. A plurality of holes 110 may be provided. The waste fluid flowing through the down tube 20 of FIG. 9A flows out of the plurality of holes 110 and into the up tube 40. Structural modifications of the device in FIG. 9 to account for reversal of flow direction when the waste fluid has a higher density may be made as described above.

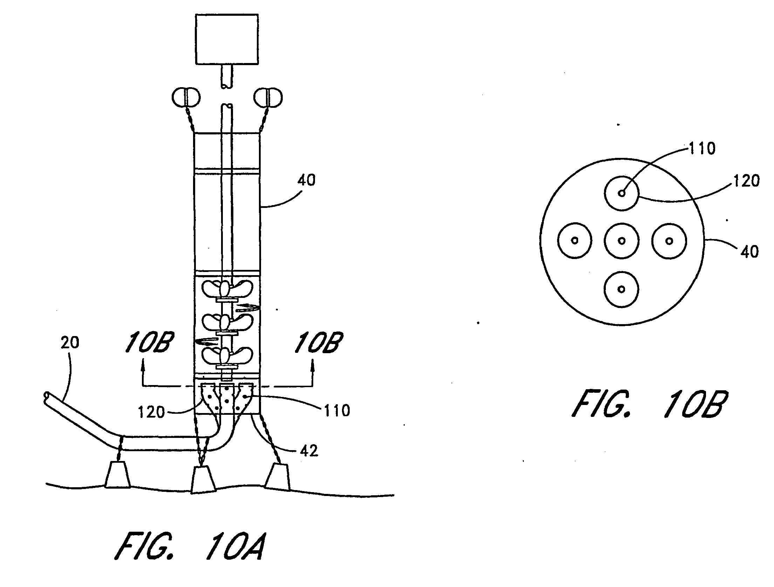

FIGS. 10A and 10B show the down tube 20 separated into a plurality of secondary down tubes 120. There may be a plurality of holes 110 in the secondary down tubes 120, similar to the embodiment of the down tube 20 shown in FIG. 9A. FIG. 10B shows a sectional view of the down tube 20 of the embodiment of FIG. 10A from below wherein each of the five secondary down tubes 120 is closed except for a single hole 110. In the embodiment of the down tube 20 of FIGS. 10A and 10B, the waste fluid that is introduced into the down tube 20 exits the holes 110 to enter the up tube 40. Structural modifications of the device in FIG. 10 to account for reversal of flow direction when the waste fluid has a higher density may be made as described above.

In other embodiments, the down tube 20 (or "up" tube in those situations where flow is reversed due to fluid density differentials) may separate into a plurality of secondary down tubes 120, as in the embodiment of the down tube 20 of FIG. 10A, but there are no holes 110 in the secondary down tubes 120, and the outlet ends 24 of the secondary down tubes 120 are open. In this embodiment of the down tube 20 (not shown), the waste fluid which is introduced into the down tube 20 exits the open outlet ends 24 of the secondary down tubes 120 to enter the up tube 40.

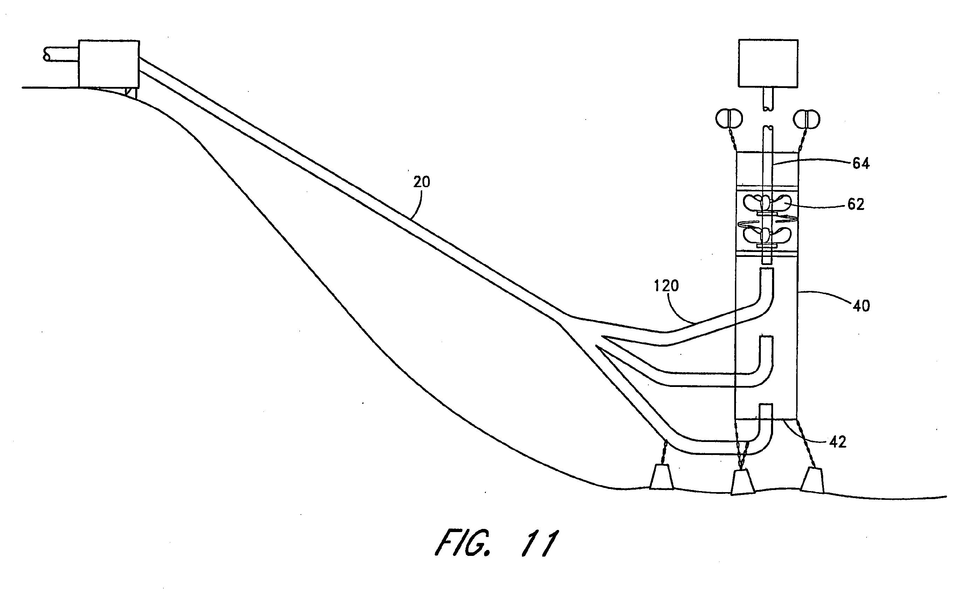

FIG. 11 shows a down tube 20 which separates into a plurality of secondary down tubes 120. Structural modifications of the device in FIG. 11 to account for reversal of flow direction when the waste fluid has a higher density may be made as described above.

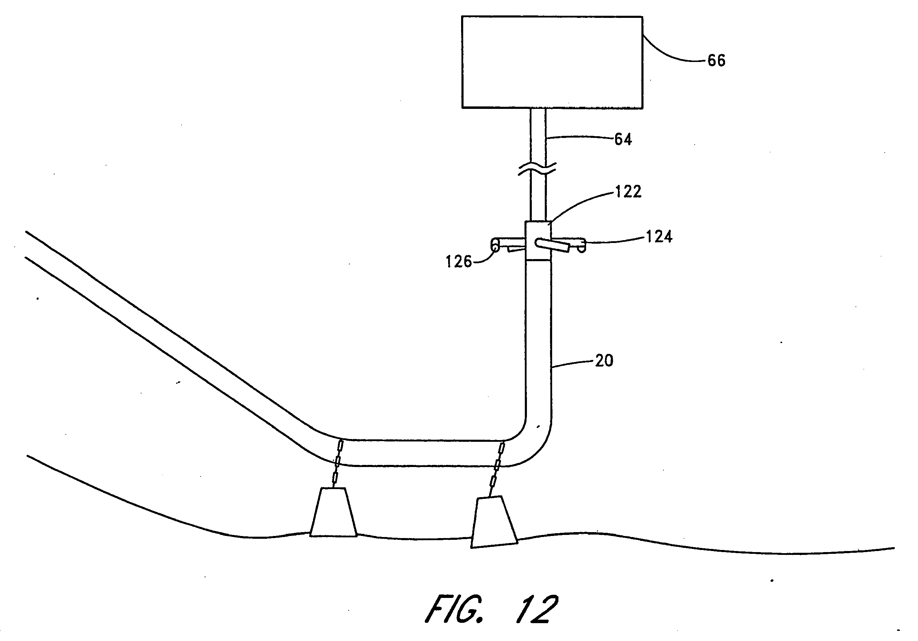

FIG. 12 shows another embodiment of the down tube 20 in which the down tube 20 terminates in a hub 122. The hub 122 forms a cap on the down tube 20 and rotates freely on the down tube 20. A plurality of spoke outlets 124 are fluidly connected to the hub 122. The plurality of spoke outlets 124 emerge at approximately a right angle from the hub 124 and then bend at a second angle before terminating in a spoke discharge 126. The spoke discharge 126 may have an open end or a partially closed end where the water from the down tube 20 discharges. The embodiment of the down tube 20 shown in FIG. 12 is similar to a rotating lawn sprinkler. The hub 122 is attached to the shaft 64, which is in turn connected with the electrical generator 66. In the embodiment shown in FIG. 12, there is no up tube 40.

When fluid waste and seawater mixture flows through the down tube 20 and is discharged out of the spoke outlets 124, the hub 122, shaft 64, and electrical generator 66 rotate, generating electrical power. The energy generated by the electrical generator 66 comes almost exclusively from the kinetic energy from the fluid waste emerging from the plurality of spoke discharges 126, because there is no tube 40 or means of generating power from hydrocratic energy generated from the mixing of fluid waste from the down tube 20 with water of high salinity.

Structural modifications of the device in FIG. 12 to account for reversal of flow direction when the waste fluid has a higher density may be made as appropriate.

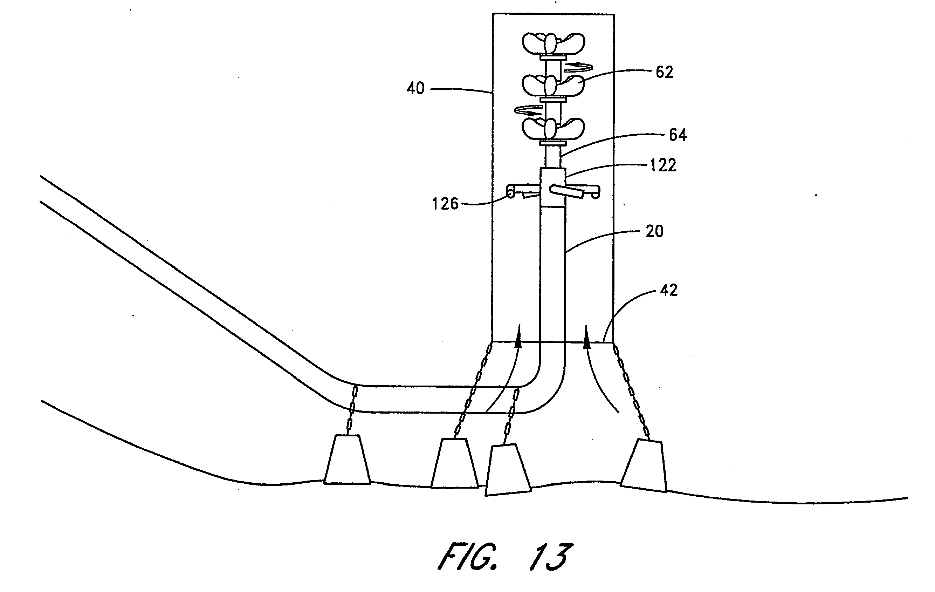

FIG. 13 shows another embodiment of the down tube 20 similar to the embodiment of FIG. 12, with a hub 122, a plurality of spoke outlets 124, and a plurality of spoke discharges 126 at the ends of the spoke outlets 124. The embodiment of FIG. 13 differs from the embodiment of FIG. 12 in that the spoke discharges 126 discharge the waste fluid from the down tube 20 into an up tube 40 with an open lower end 42 and a plurality of propellers 62 attached to the shaft 64. The fluid waste which exits the spoke discharges 126 into the up tube 40 causes upwelling and mixing in the up tube 40, also rotating the propellers, which in turn drive the shaft 64. The shaft 64 drives a electrical generator 66 (not shown), generating electrical power.

In FIG. 13, the shaft 64 is rotated both by the discharge of waste fluid from the spoke discharges 126 rotating the hub 122 and by the upwelling in the up tube 40 turning the propellers 62, which in turn rotate the shaft 64. The energy generated by the mixing process in the embodiment of FIG. 13 is therefore a combination of kinetic energy from the rotation of the hub 122, shaft 64, and electrical generator (not shown) from the fluid waste ejected from the spoke discharges 126 and from hydrocratic energy generated from the upwelling in the up tube 40 from the mixing of fluid waste from the spoke discharges 126 mixing with the water of high salinity entering the up tube 40 from the lower end 42. Structural modifications of the device in FIG. 13 to account for reversal of flow direction when the waste fluid has a higher density may be made as appropriate.

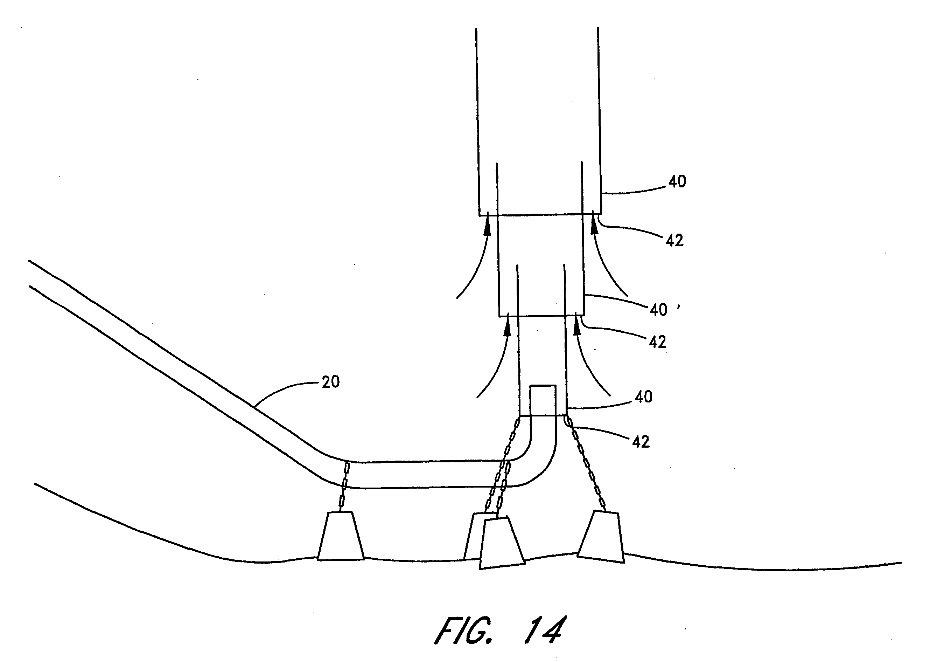

FIG. 14 illustrates another embodiment of the up tube 40 in which there are a plurality of nested up tubes 40 having increasing diameters. The lower end 42 of each of the plurality of nested up tubes 40 is open. Fluid waste is introduced into the down tube 20 causing upwelling and mixing with seawater in the plurality of up tubes 40 when the water of high salinity enters the open lower ends 42 of the nested up tubes 40. Structural modifications ofthe device in FIG. 14 to account for reversal of flow direction when the waste fluid has a higher density may be made. This would require the nested up tubes having increasing diameters in a downward rather than an upward direction.

Any of the embodiments of power generators 60 can be combined with the embodiment of the nested up tubes 40 of FIG. 14. For example, in one embodiment, the propellers 62 of FIGS. 4 and 5 may be used as a power generator 60 in combination with the nested up tubes 40 of FIG. 14. In another embodiment, the power generator 60 may comprise one or more spiral fans 70, as shown in FIG. 6.

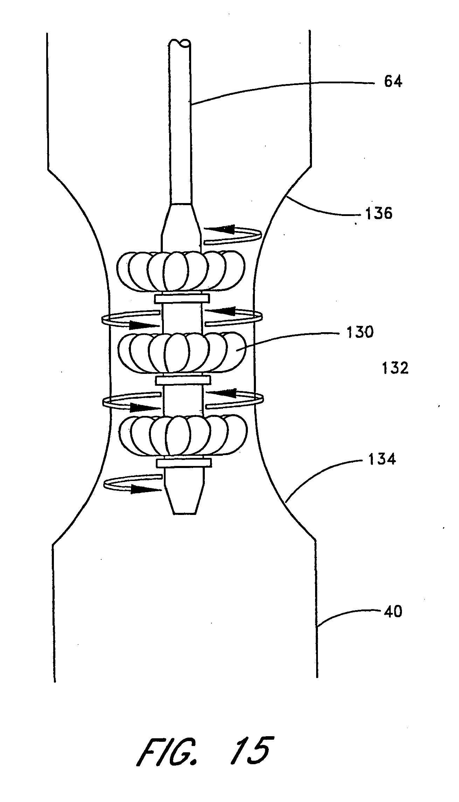

FIG. 15 shows another embodiment ofthe up tube 40 for mixing and a power generator 60. In the embodiment of FIG. 15, a plurality of turbines 130 are mounted on a shaft 64 inter-spaced between a plurality of stators 132. The stators 132 direct the water flow into the turbine blades of the turbines 130 to increase the efficiency thereof. The shaft 64 is connected to an electrical generator 66 (not shown). When fluid waste and seawater mixtures upwell in the up tube 40, the upwelling mixture turns the turbines 130, which in turn rotate the shaft 64 and the electrical generator 66, generating power.

In the embodiment shown in FIG. 15, the portion ofthe up tube 40 surrounding the turbines 130 and stators 132 comprises a nozzle 134 and an expander 136. The nozzle 134 reduces the diameter ofthe up tube 40 in the portion ofthe up tube 40 around the turbines 130 and stators 132 from the diameter of the remainder of the up tube 40. By reducing the diameter of the up tube 40 with the nozzle 134 in the portion of the up tube 40 surrounding the turbines 130, the upwelling fluid waste and water mixture is forced into a smaller area and is accelerated to a higher velocity flow that enhances the mixing process and can be harnessed more efficiently by the turbines 130. Nozzles 134 and stators 132 can also be used with other embodiments ofthe power generator 60 illustrated herein. Structural modifications of the device in FIG. 15 to account for reversal of flow direction when the waste fluid has a higher density may be made as described above.

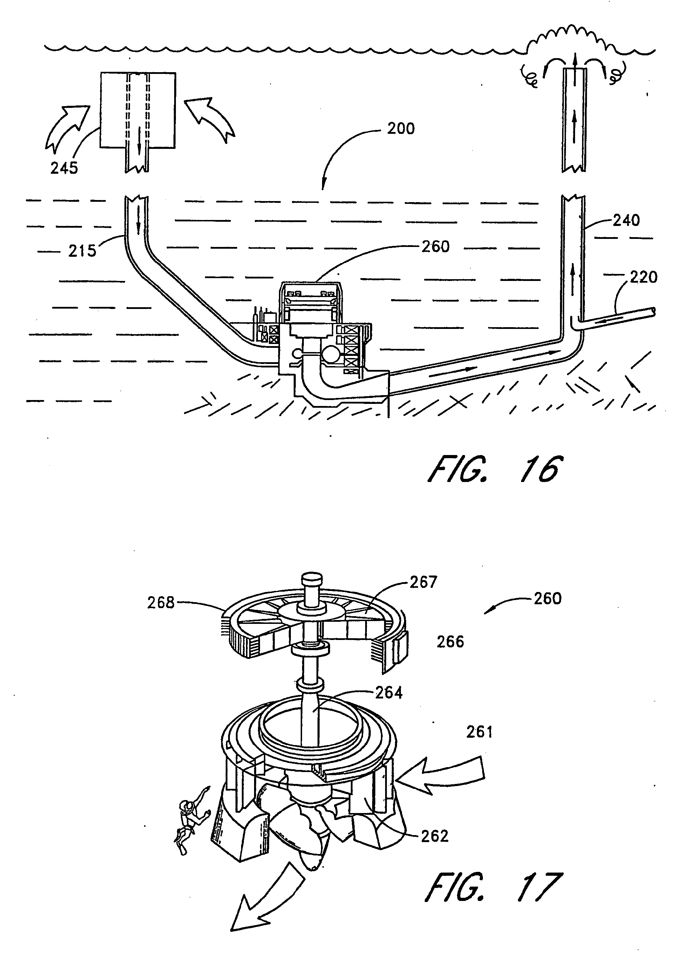

FIG. 16 is a schematic illustration of a possible large-scale commercial embodiment of a waste fluid and seawater mixing device 200 having features and advantages of the present invention. While a particular scale is not illustrated, those skilled in the art will recognize that the device 200 is advantageously suited for large-scale deep-water use 100-500 meters or more beneath sea level. The up tube 240 extends upward and terminates at any convenient point beneath sea level. The diameter of the up tube may be 3-20 meters or more, depending upon the desired capacity of the device 200. This particular design is preferably adapted to minimize environmental impact and, therefore, does not result in upwelling of nutrient rich water from the ocean depths.

Sea water is admitted into the device from an elevated inlet tube 215 through a filter screen or grate 245. The filter removes sea life and/or other unwanted objects or debris that could otherwise adversely impact the operation of generator 200 or result in injury to local sea life population. If desired, the inlet tube 215 may be insulated in order to minimize heat loss of the siphoned-off surface waters to colder water at or near full ocean depth. Advantageously, this ensures that the temperature and, therefore, the density of the sea water drawn into the generator 200 is not too cold and dense to prevent or inhibit upwelling in the up tube 240.

The sea water is passed through a hydraulic turbine power plant 260 of the type used to generate hydraulic power at a typical hydro-electric facility. The turbine and generator assembly is illustrated in more detail in the cutaway view of FIG. 16. Water enters the turbine 261 through a series of louvers 262, called wicket gates, which are arranged in a ring around the turbine inlet. The amount of water entering the turbine 261 can be regulated by opening or closing the wicket gates 262 as required. This allows the operators to keep the turbine turning at a constant speed even under widely varying electrical loads and/or hydraulic flow rates. Maintaining precise speed is desirable since it is the rate of rotation which determines the frequency ofthe electricity produced.

The turbine is coupled to an electric generator 266 by a long shaft 264. The generator 266 comprises a large, spinning "rotor" 267 and a stationary "stator" 268. The outer ring of the rotor 267 is made up of a series of copper wound iron cells or "poles" each of which acts as an electromagnet. The stator 268 is similarly comprised of a series of vertically oriented copper coils disposed in the slots of an iron core. As the rotor 267 spins, its magnetic field induces a current in the stator's windings thereby generating alternating current (AC) electricity.

Referring again to FIG. 16, the sea water is discharged from the turbine into the up tube 240. Fluid waste is introduced into the base of the up tube 240 by down tube 220. The mixing of fluid waste into saline sea water releases the hydrocratic or osmotic energy potential of the fluid waste in accordance with the principles discussed above, resulting in a concomitant pressure drop (up to 190 meters of head) across the hydraulic turbine 260. This pressure drop in conjunction with the induced water flow upwelling through the up tube 240 allows for thorough mixing of waste fluid and seawater as well as generation of significant hydro-power for commercial power production applications without adversely affecting surrounding marine culture.

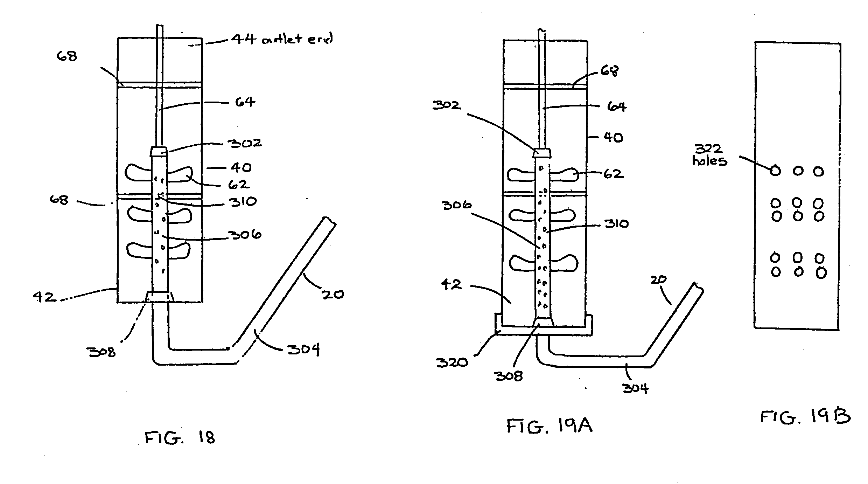

With reference to Figure 18 of the drawings, this embodiment shows an up tube 40 having an open lower end 42 and an open outlet end 44. A down tube 20 is provided which enters the up tube 40 through the lower end 42, and extends to a point approximately midway along the length of the uptube, where it is sealed by a cap 302. A shaft 64 extends upwardly from the cap 3 02, extending to a generator, not shown in Figure 18, but substantially similar to generators shown in some of the Figures described above.

Although in the embodiment shown in Figure 18, the down tube 20 is shown as extending to a point approximately midway up the length of the up tube 40, this construction may, in practice, vary widely according to the conditions, length ofthe up tube 40, and other apparatus parameters. Thus, the down tube 20 may extend only a short distance into the up tube 40, or it may extend well beyond the midpoint thereof, to a selected height.

The down tube 20 comprises an outside portion 304, located outside of the up tube 40, and an inside portion 306, located within the up tube 40. The outside portion 304 and inside portion 306 of the down tube 20 are connected to each other by a rotational connector 308, which, in the embodiment shown in Figure 18 is at the level of the open lower end 42. However, this rotational connector 308 could be configured on the down tube 20 at any appropriate vertical position of the down tube 20.

The rotational connector 308 permits rotation of the inside portion 306 relative to the outside portion 304, as will be described.

The inside portion 3 06 has a plurality of radial apertures 310, which may be randomly disposed on the inside portion 306, or specifically located, such as beneath a turbine 62, according to the selected configuration of the generator. Fresh water entering the down tube 20 from a supply source or reservoir passes through the rotational connector 308, and into the inside portion 3 06, where it must exit through one of the radial apertures. The cap 302 mounted at the top end of the inside portion 306 prevents any water or liquid from the down tube 20 from exiting the inside portion 306, except through the radial apertures 310.

The inside portion 3 06 and shaft 64 are secured appropriately in position by shaft supports 68 to prevent wobbling or axial displacement thereof, as has already been described above in other embodiments.

In operation, waste fluid exiting the down pipe 20 through the radial apertures 310 is mixed with water of higher salinity entering the lower end 42 ofthe upper tube 40. The energy produced by the mixing ofthe water of higher salinity and lower salinity drives turbine 62, which in turn rotates the inside portion 306, the cap 302, and the shaft 64. This embodiment permits accurate selection of apertures 310 for releasing of the fresh water into the up tube 40, in a manner that is fixed with respect to the turbines 62. Since the radial apertures 310 and turbines 62 are both rotating, the precise location of mixing, and the optimal effect thereof of driving the turbine 62, can be exploited to improve the efficiency and hence the energy produced by the apparatus ofthe invention. This is achieved by the use of the rotational connector 308 which allows relative rotation ofthe inside portion 306, but ensures no leakage or fresh water escape from the down tube 20 at the position of the rotational connector 308.

Figure 19 shows a variation of the apparatus shown in Figure 18, including the up tube 40, the down tube 20 having an outside portion 304, and an inside portion 306, the outside and inside portions 304 and 306 respectively being connected by the rotational connector 308. A cap 302 is provided at the top end of the inside portion 306, and a series of turbines 62 are mounted on the inside portion 306, which has a plurality of selectively placed radial apertures 310. The apparatus in Figure 19 differs from the embodiment shown in Figure 18 by the existence of a closure piece 320 over the lower end 42 of the up tube 40. Since the closure piece 320 prevents sea water from entering the lower end 42 of the up tube 40, a plurality of holes 322 are provided at locations in the wall of the up tube 40, as shown in Figure 19B, through which the sea water is introduced to the interior of the up tube 40. One advantage of the embodiment shown in Figures 19A and 19B is that the sea water can be introduced at the most efficient point, thereby facilitating control of the precise points or areas at which the sea water as well as the waste fluid are first introduced and allowed to mix. This factor, coupled with the orientation of turbines 62 on the inside portion 306, can be used to streamline the efficiency of the apparatus. As was the case with respect to Figure 18, the waste fluid is only allowed to exit through the radial apertures between the rotational connector 308 and the cap 302, at a position, flow-rate and orientation which can be controlled and manipulated to advantage.

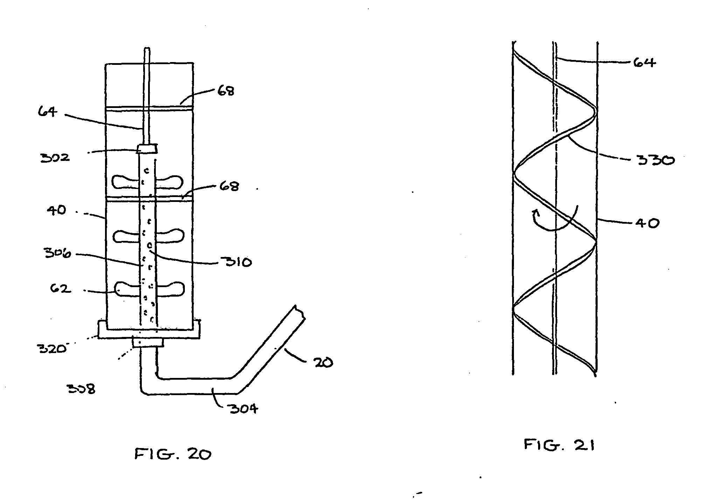

In Figure 20 of the drawings, a further embodiment showing a variation of those illustrated in Figures 18 and 19 ofthe drawings is illustrated. In this embodiment, an up tube 40 is provided, as well as a down tube 20 including an outside portion 304, an inside portion 306 having a plurality of radial apertures 310, and a cap 302. At the lower end 42, a closure piece 320 is provided. In the embodiment shown in Figure 20, the rotational device 308 is positioned outside of the up tube 40 and closure piece 320 so as to permit rotation of both the inside portion 306 of the down tube 40, and the up tube 20, in response to energy production which causes rotation of the turbine 62. Thus, rotation about the connector 308 as a result of forces on the turbines 62 thereby rotates the closure piece 320, up tube 40 and the inside portion 306 of the down tube 20.

As was the case in the embodiment shown in Figure 19A and 19B, sea water will enter the up tube 40, not through the lower end 42, but through a series of holes 322 of the type shown in Figure 19B. Alternatively, instead of having a plurality of holes 322, one or more slits may be provided in the wall of the up tube 40, such as those shown in Figures 7B or 8B of the drawings.

The embodiment of Figure 20 is yet another variation by means of which the precise location of entry of the waste fluid and sea water respectively into the up tube 40 can be controlled and exploited to derive maximum energy and power following hydrocrasis and the energy released thereby.

Figure 21 ofthe drawings shows a variation ofthe invention which uses neither vanes nor turbines on the shaft 64, but rather a helical screw 330 mounted on the shaft, and which is caused to rotate in response to the energy released by mixing of the fluids with different salinities. Such forces acting on the helical screw 330 rotate the shaft 64, which in turn transmits rotational forces to the generator for use as described above.

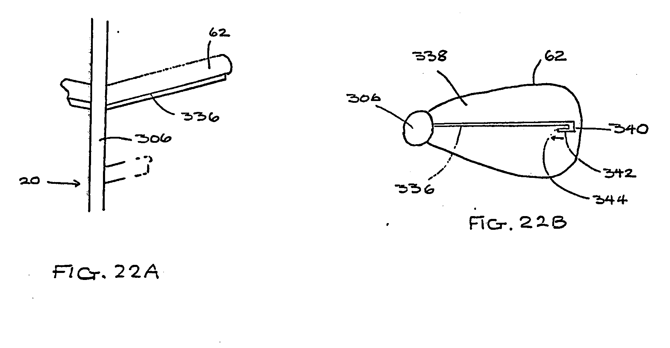

Figure 22A of the drawings shows an alternative embodiment for delivering waste fluid from the down tube 20 to a precise location with respect to the fan blades. As shown in Figure 22A, an inside portion 306 of the down tube 20 has a plurality of fan blades 62, also referred to as turbines, mounted thereon. Instead of exiting the inside portion 306 through a plurality of apertures, the waste fluid in the inside portion 306 is fed through a fan tube 336 which is mounted on the underside 338 of the fan blade 62. Towards the outer extremity 340 ofthe fan blade 62, the fan tube 336 includes a U-shaped section 342, terminating in an outlet 344. Thus, waste fluid enters through the inside portion 306, flows along the fan tube 336, into the U-shaped section 342, and exits through outlet 344. In the embodiment shown in Figures 22A and 22B, the waste fluid thus flows from the interior pipe through a series of smaller pipes located under the fan blades 62 (or helical screw, if this embodiment is used), to the outer edge of the fan blades 62. The direction of flow is reversed so the waste fluid exits in a flow direction which is towards the center of the up tube 40.

The embodiment shown in Figures 22A and 22B allows the apparatus to take advantage, once more, of controlling the exit areas for the saline and waste fluid, thereby pinpointing the reaction location for maximum energy production and/or use of such energy in a manner which rotates the fan blades optimally. As with the other embodiments, the inside portion 306 of the down tube 20 is attached to a rotating shaft, which in turn attaches to a generator or power mechanism which uses or stores the energy so produced.

In the embodiments discussed above, the up tube 40 is preferably located in a body ofwater of high salinity and high negative osmotic potential such as an ocean or a sea. The water of high salinity and high negative osmotic potential enters the up tube 40 in a ratio of greater than 8:1 salt water to fluid waste, more preferably 30:1 salt waterto fluid waste, and most preferably about 34:1 or higher. The mixing ofthe fluid waste of low negative osmotic potential with the sea water of high negative osmotic potential in the up tube 40 causes upwelling and draws sea water into the up tube 40 through the openings. The upwelling causes thorough mixing in the up tube 40 and rotates propellers 62, spiral fans 70 or turbines 130,261, which are attached to a drive shaft 64, 264. The rotating shaft 64, 264 turns the electrical generator 66, 266 generating electrical power from the difference in osmotic potential between the fluid waste introduced into the down tube 20 and the water of high salinity which enters the up tube 40 through the openings in the up tube 40. The mixing ofthe waste fluid and seawater can, as discussed above also result from the fact that the waste fluid has a higher density than the seawater. Corresponding processes are used, but with a reversal of flow direction.

Because the method depends on having solutions of different osmotic potentials exiting the down tube 20 and entering the up tube 40, it is preferable that the source of fluid waste exiting the down tube 20 and the source of the water of high salinity entering the up tube 40 continue to have different osmotic potentials over time so that power generation continues over a long period of time. For example, if the body of water of high salinity surrounding the up tube 40 is small, the fluid waste exiting the down tube 20 can dilute the water of high salinity after exiting the up tube 40, reducing the difference in osmotic potential between the fluid waste and the water ofhigh salinity. Reducing the difference in osmotic potential between the fluid waste exiting the down tube 20 and the water of high salinity entering the up tube 40 reduces the amount of energy available. It is therefore generally advantageous that the body of water of high salinity have a large volume. Locating the up tube 40 in a large body of water having high salinity such as the ocean is therefore a preferred embodiment, but the invention is certainly not limited to such an application.

Alternatively, the invention can be operated between bodies of salt water having different salinity or between waters at different depths ofthe same body of water. For example, the salinity and temperature of sea water is known to vary with depth and location. In the Hawaiian islands, at a depth of 1000 meters, the ambient water temperature is approximately 35°F, with a salinity of approximately 34.6 ppt. The surface temperature is approximately 80°F with a salinity of approximately 35.5 ppt. Thus, an osmotic energy potential (albeit small) exists between the surface waters and the waters at 100 meters depth.

While the present invention is disclosed in the context of generating power by directly contacting and mixing fluid waste with sea water in an apparatus located in the ocean, it is to be understood that the apparatus and method are not limited to this embodiment. The techniques and concepts taught herein are also applicable to a variety of other situations where aqueous solutions having differing osmotic potentials are available. For example, in one embodiment, the apparatus and method maybe applied to a concentrated brine from a desalinization plant being mixed with the less-concentrated brine in sea water. In another embodiment, a treated sewage effluent, a fresh water stream, can be mixed with sea water. If desired, an osmotic membrane or osmotic water exchange plenum may be provided at the outlet end of the down tube and/or at the outlet (top) of the up tube in order to increase the efficiency of energy production. The apparatus and method may thus be applied to a wide range of applications in which two solutions of differing osmotic potential are available.

It is intended that the scope ofthe present invention herein disclosed should not be limited by the particular disclosed embodiments described above, but should be determined only by a fair reading of the claims that follow.

## Claims

1. A method for disposal of waste fluid comprising:
(a) directing the waste fluid having a first osmotic energy potential from a source through a feed tube (20) into a larger mixing chamber (40) located in a body of water (28) having a second osmotic energy potential;
(b) introducing water from the body of water (28) into the mixing chamber (40);
(c) mixing within the mixing chamber (40) the waste fluid with water from the body of water to form a waste fluid/ water mixture, the mixing being driven at least in part by osmotic energy potential difference between the waste fluid and the water in the body of water, the chamber having sufficient length to facilitate substantial mixing of the waste fluid with water from the body of water (28); and
(d) allowing the waste fluid/ water mixture to flow into the body of water from an opening (44) in the chamber;
**characterized in that** further comprising the step of injecting a smaller stream of an additive into the chamber, the additive being selected from the group consisting of at least one of hydrogen peroxide, disinfectant, and microbial culture.

2. The method as claimed in claim 1 where the waste fluid has a higher density than the water in the body of water and the waste fluid is directed by the feed tube (20) into an upper portion of the chamber thereby causing downward flow through the chamber (40) of the waste fluid and water from the body of water (28) as it mixes to form the waste fluid / water mixture.

3. The method as claimed in claim 1 where the waste fluid has a lower density than the water in the body of water and the waste fluid is directed by the feed tube (20) into a lower portion (3) of the chamber (40) thereby causing upward flow through the chamber (40) of the waste fluid and water from the body of water (28) as it mixes to form the waste fluid/ water mixture.

4. The method as claimed in claim 1 further comprising the step of recovering power from the flow of the waste fluid/water mixture by locating a turbine (60) in the chamber to capture energy from the flowing mixture.

5. The method as claimed in claim 1 wherein the waste fluid comprises a salty brine product from desalinization of seawater.

6. The method as claimed in claim 1 wherein the waste fluid comprises a salty brine separated from petroleum in the course of oil production.

7. The method as claimed in claim 1 wherein the waste fluid comprises a treated municipal or industrial sewage stream.

8. The method as claimed in claim 8 wherein the additive is injected into the chamber upstream of the feed tube to the water introduced to the chamber from the body of water before the water contacts the fluid waste for the mixing process.

9. The method as claimed in claim 8 wherein the additive is injected into the chamber downstream of the feed tube to the fluid waste/water mixture undergoing mixing in the chamber after the water contacts the fluid waste for the mixing process.

10. The method as claimed in claim 1 wherein the body of water is seawater.

11. The method of claim 4 wherein the feed tube (20) has an inside portion (306) and an outside portion (304), said inside portion (306) being disposed within the mixing chamber and having radial apertures (310) to allow the waste fluid to exit the feed tube, wherein said inside portion (306) is rotatably connected to said outside portion (304) so as to said turbine (60) and inside portion (306) both rotate.

12. A waste fluid disposal device comprising:
a feed tube (29) for directing the waste fluid having a first osmotic energy potential from a source (25) through the feed tube(20);
a mixing chamber (40) for location in a body of water (28) having a second osmotic energy potential, the mixing chamber (40) receiving the feed tube (20) so that waste fluid can be introduced therein;
an opening (44) in the mixing chamber at a location remote from the feed tube (20);
wherein mixing occurs within the mixing chamber (40) between the waste fluid and water (28) from the body of water to form a waste fluid/water mixture, the mixing being driven at least in part by osmotic energy potential difference between the waste fluid and the water in the body of water (28), the chamber (40) having sufficient length to facilitate substantial mixing of the waste fluid with water from the body of water (28);
**characterized in that** further comprises means for injecting a smaller stream of an additive into the chamber, said additive be selected from the group consisting of hydrogen peroxide, disinfectant and microbial culture.

13. The device as claimed in claim 12 where the waste fluid has a higher density than the water in the body of water and the waste fluid is directed by the feed tube into an upper portion of the chamber thereby causing downward flow through the chamber of the waste fluid and water from the body of water as it mixes to form the waste fluid/water mixture.

14. The device as claimed in claim 12 where the waste fluid has a lower density than the water in the body of water and the waste fluid is directed by the feed tube into a lower portion of the chamber thereby causing upward flow through the chamber of the waste fluid and water from the body of water as it mixes to form the waste fluid/water mixture.

15. The device as claimed in claim 12 further comprising a turbine (62) in the chamber for recovering power from the flow of the waste fluid/water mixture to capture energy from the flowing mixture.

16. The device of claim 15 wherein the feed tube (20) has an inside portion (306) and an outside portion (304), said inside portion (306) being disposed within the mixing chamber and having radial apertures (310) to allow the waste fluid to exit the feed tube, wherein said inside portion (306) is rotatably connected to said outside portion (304) so as to said turbine (60) and inside portion (306) both rotate.

## Patentansprüche

1. Verfahren zur Abwasserentsorgung mit folgenden Schritten:
(a) Einleiten des Abwassers, das ein erstes osmotisches Energiepotential aufweist, aus einer Quelle durch ein Speiserohr (20) in eine größere Mischkammer (40), die sich in einem Wasservolumen (28) eines zweiten osmotischen Energiepotentials befindet;
(b) Einleiten von Wasser aus dem Wasservolumen (28) in die Mischkammer (40);
(c) Mischen des Abwassers mit Wasser aus dem Wasservolumen in der Mischkammer (40) zum Bilden eines Abwasser/Wasser-Gemischs, wobei das Vermischen mindestens teilweise durch die Differenz des osmotischen Energiepotentials zwischen dem Abwasser und dem Wasser des Wasservolumens erfolgt und die Kammer lang genug ist, um das Abwasser mit dem Wasser aus dem Wasservolumen (28) gründlich zu vermischen; und
(d) Einlaufenlassen des Abwasser/Wasser-Gemischs in das Wasservolumen aus einer Öffnung (44) in der Kammer;
weiterhin **dadurch gekennzeichnet, dass** man in die Kammer einen kleineren Strom eines Zusatzes einführt, den man aus der aus mindestens einem Element der aus Wasserstoffperoxid, Desinfektionsmittel und mikrobielle Kultur bestehenden Gruppe auswählt.

2. Verfahren nach Anspruch 1, bei dem das Abwasser eine höhere Dichte als das Wasser des Wasservolumens hat und man das Abwasser mittels des Speiserohrs (20) in einen oberen Kammerbereich leitet, so dass eine Abwärtsströmung von Abwasser und Wasser des Wasservolumens (28) durch die Kammer (40) erfolgt, während sie sich zum Abwasser/Wasser-Gemisch vermischen.

3. Verfahren nach Anspruch 1, bei dem das Abwasser eine niedrigere Dichte als das Wasser im Wasservolumen hat und das Speiserohr (20) das Abwasser in einen unteren Bereich (3) der Kammer (40) führt, so dass eine Aufwärtsströmung von Abwasser und Wasser des Wasservolumens (28) durch die Kammer (40) erfolgt, während sie sich zum Abwasser/Wasser-Gemisch vermischen.

4. Verfahren nach Anspruch 1 weiterhin mit dem Schritt einer Energierückgewinnung aus der Strömung des Abwasser/Wasser-Gemischs, indem man eine Turbine (60) in der Kammer anordnet, um mit der strömenden Mischung Energie zu erzeugen.

5. Verfahren nach Anspruch 1, bei dem das Abwasser eine salzhaltige Lösung bzw. ein Soleprodukt aus der Meerwasserentsalzung ist.

6. Verfahren nach Anspruch 1, bei dem das Abwasser eine bei der Erdölförderung von Erdöl abgetrennte salzhaltige Lösung bzw. ein solches Soleprodukt ist.

7. Verfahren nach Anspruch 1, bei dem das Abwasser eine behandelte Stadt- oder Industrieabwasserströmung ist.

8. Verfahren nach Anspruch 8, bei dem man den Zusatz in die Kammer stromaufwärts der Speiseleitung dem aus dem Wasservolumen in die Kammer gegebenen Wasser zugibt, bevor das Wasser das Abwasser zum Mischen kontaktiert.

9. Verfahren nach Anspruch 8, bei dem man den Zusatz in die Kammer stromabwärts der Speiseleitung in die Abwasser/Wasser-Mischung eingibt, die in der Kammer vermischt wird, nachdem das Wasser das Abwasser für das Vermischen kontaktiert hat.

10. Verfahren nach Anspruch 1, bei dem das Wasservolumen Meerwasser ist.

11. Verfahren nach Anspruch 4, bei dem das Speiserohr (20) einen Innenteil (306) und einen Außenteil (304) aufweist, wobei der Innenteil (306) sich in der Mischkammer befindet und radiale Öffnungen (310) enthält, durch die das Abwasser aus dem Speiserohr austreten kann, und der Innenteil (306) mit dem Außenteil (304) drehbar verbunden ist, so dass die Turbine (60) und der Innenteil (306) beide drehen können.

12. Abwasserentsorgungsanlage mit:
einem Speiserohr (29), durch das das Abwasser, das ein erstes osmotisches Energiepotential aufweist, aus einer Quelle (25) leitbar ist;
einer Mischkammer (40), die in ein Wasservolumen (28) eines zweiten osmotischen Energiepotentials einsetzbar ist und die das Speiserohr (20) aufnimmt, so dass Abwasser in die Mischkammer einleitbar ist; und
einer Öffnung (44) in der Mischkammer an einer vom Speiserohr (20) entfernten Stelle;
wobei in der Mischkammer (40) eine Vermischen des Abwassers mit dem Wasser (28) aus dem Wasservolumen zu einem Abwasser/Wasser-Gemisch erfolgt, das Vermischen mindestens teilweise von der Differenz der osmotischen Energiepotentiale des Abwassers und des Wassers des Wasservolumens (28) getrieben wird und die Kammer (40) lang genug ist, um das Abwasser mit Wasser aus dem Wasservolumen (28) gründlich zu vermischen;
**dadurch gekennzeichnet, dass** die Anlage weiterhin eine Einrichtung zum Einleiten einen kleineren Strom eines Zusatzes in die Kammer aufweist, der aus der aus Wasserstoffperoxid, Desinfektionsmittel und mikrobieller Kultur bestehenden Gruppe ausgewählt ist.

13. Anlage nach Anspruch 12, bei der das Abwasser eine größere Dichte hat als das Wasser im Wasservolumen und das Abwasser vom Speiserohr einem oberen Bereich der Kammer zugeführt wird, so dass in der Kammer eine Abwärtsströmung des Abwassers und des Wasser aus dem Wasservolumen beim Vermischen zum Abwasser/Wasser-Gemisch entsteht.

14. Anlage nach Anspruch 12, bei der das Abwasser eine geringere Dichte hat als das Wasser im Wasservolumen und das Abwasser vom Speiserohr einem unteren Bereich der Kammer zugeführt wird, so dass in der Kammer eine Aufwärtsströmung des Abwassers und des Wasser aus dem Wasservolumen beim Vermischen zum Abwasser/Wasser-Gemisch entsteht.

15. Anlage nach Anspruch 12 weiterhin mit einer Turbine (62) in der Kammer, mit der aus der Strömung des Abwasser/Wasser-Gemischs Energie rückgewinnbar ist, um Energie aus dem strömenden Gemisch zu erzeugen.

16. Anlage nach Anspruch 15, bei der das Speiserohr (20) einen Innenteil (306) und einen Außenteil (304) aufweist und der Innenteil (306) in der Mischkammer liegt und radiale Öffnungen (310) enthält, durch die Abwasser aus dem Speiserohr austreten kann, wobei der Innenteil (306) drehbar mit dem Außenteil (304) verbunden ist, so dass die Turbine (60) und der Innenteil (306) beide drehen können.

## Revendications

1. Procédé pour l'élimination d'un fluide de déchet comprenant :
(a) diriger le fluide de déchet ayant un premier potentiel d'énergie osmotique d'une source à travers un tube d'alimentation (20) dans une chambre de mélange (40) plus grande située dans un corps d'eau (28) ayant un second potentiel d'énergie osmotique ;
(b) introduire de l'eau du corps d'eau (28) dans la chambre de mélange (40) ;
(c) mélanger dans la chambre de mélange (40) le fluide de déchet avec de l'eau du corps d'eau pour former un mélange fluide de déchet/eau, le mélange étant réalisé au moins en partie par la différence de potentiel d'énergie osmotique entre le fluide de déchet et l'eau dans le corps d'eau, la chambre ayant une longueur suffisante pour faciliter le bon mélange du fluide de déchet avec l'eau du corps d'eau (28) ; et
(d) permettre au mélange fluide de déchet/eau de s'écouler dans le corps d'eau par une entrée (44) dans la chambre ;
**caractérisé en ce que** le procédé comprend en outre l'étape d'ajouter un flux moins important d'un additif dans la chambre, l'additif étant choisi dans le un groupe constitué d'au moins l'un parmi du peroxyde d'hydrogène, un désinfectant, et une culture microbienne.

2. Procédé selon la revendication 1, dans lequel le fluide de déchet a une densité plus élevée que l'eau dans le corps d'eau et le fluide de déchet est dirigé par le tube d'alimentation (20) dans une partie supérieure de la chambre causant ainsi un flux descendant à travers la chambre (40) du fluide de déchet et de l'eau du corps d'eau (28) lors du mélange pour former le mélange fluide de déchet/eau.

3. Procédé selon la revendication 1, dans lequel le fluide de déchet a une densité moindre que l'eau dans le corps d'eau et le fluide de déchet est dirigé par le tube d'alimentation (20) dans une partie inférieure (3) de la chambre (40) causant ainsi un flux ascendant à travers la chambre (40) du fluide de déchet et de l'eau du corps d'eau (28) lors du mélange pour former le mélange fluide de déchet/eau.

4. Procédé selon la revendication 1, comprenant en outre l'étape de récupérer de la puissance du flux du mélange fluide de déchet/eau par le placement d'une turbine (60) dans la chambre pour gagner de l'énergie du mélange s'écoulant.

5. Procédé selon la revendication 1, dans lequel le fluide de déchet comprend un produit de saumure salé du dessalement d'eau de mer.

6. Procédé selon la revendication 1, dans lequel le fluide de déchet comprend une saumure salée isolée à partir de pétrole dans la production d'huile.

7. Procédé selon la revendication 1, dans lequel le fluide de déchet comprend un flux traité d'eaux usées industrielles ou municipales.

8. Procédé selon la revendication 8, dans lequel l'additif est ajouté dans la chambre en amont du tube d'alimentation à l'eau introduite dans la chambre du corps d'eau avant la mise en contact de l'eau avec le fluide de déchet pour le processus de mélange.

9. Procédé selon la revendication 8, dans lequel l'additif est ajouté dans la chambre en aval du tube d'alimentation au mélange fluide de déchet/eau en cours de mélange dans la chambre après la mise en contact de l'eau avec le fluide de déchet pour le processus de mélange.

10. Procédé selon la revendication 1, dans lequel le corps d'eau est de l'eau de mer.

11. Procédé selon la revendication 4, dans lequel le tube d'alimentation (20) a une partie intérieure (306) et une partie extérieure (304), ladite partie intérieure (306) étant disposée dans la chambre de mélange et ayant des ouvertures radiales (310) pour permettre au fluide de déchet de sortir du tube d'alimentation, dans lequel ladite partie intérieure (306) est liée de manière pivotante à ladite partie extérieure (304) de sorte que ladite turbine (60) et la partie intérieure (306) toutes deux pivotent.

12. Dispositif d'élimination de fluide de déchet comprenant
un tube d'alimentation (29) pour diriger le fluide de déchet ayant un premier potentiel d'énergie osmotique d'une source (25) à travers le tube d'alimentation (20) ;
une chambre de mélange (40) pour le placement dans un corps d'eau (28) ayant un second potentiel d'énergie osmotique, la chambre de mélange (40) recevant le tube d'alimentation (20) de sorte que du fluide de déchet puisse y être introduit ;
une entrée (44) dans la chambre de mélange a un emplacement distant du tube d'alimentation (20) ;
dans lequel le mélange a lieu dans la chambre de mélange (40) entre le fluide de déchet et l'eau (28) du corps d'eau pour former un mélange fluide de déchet/eau, le mélange étant réalisé au moins en partie par une différence de potentiel d'énergie osmotique entre le fluide de déchet et l'eau dans le corps d'eau (28), la chambre (40) ayant une longueur suffisante pour faciliter le bon mélange du fluide de déchet avec l'eau du corps d'eau (28) ;
**caractérisé en ce que** le dispositif comprend en outre des moyens pour ajouter un flux moins important d'un additif dans la chambre, ledit additif étant choisi dans le groupe consistant en peroxyde d'hydrogène, désinfectant et culture microbienne.

13. Dispositif selon la revendication 12, dans lequel le fluide de déchet a une densité plus élevée que l'eau dans le corps d'eau et le fluide de déchet est dirigé par le tube d'alimentation dans une partie supérieure de la chambre causant ainsi un flux descendant à travers la chambre du fluide de déchet et de l'eau du corps d'eau lors du mélange pour former le mélange fluide de déchet/eau.

14. Dispositif selon la revendication 12, dans lequel le fluide de déchet a une densité moindre que l'eau dans le corps d'eau et le fluide de déchet est dirigé par le tube d'alimentation dans une partie inférieure de la chambre causant ainsi un flux ascendant à travers la chambre du fluide de déchet et de l'eau du corps d'eau lors du mélange pour former le mélange fluide de déchet/eau.

15. Dispositif selon la revendication 12, comprenant en outre une turbine (60) dans la chambre pour récupérer de la puissance du flux du mélange fluide de déchet/eau pour gagner de l'énergie du mélange coulant.

16. Dispositif selon la revendication 15, dans lequel le tube d'alimentation (20) a une partie intérieure (306) et une partie extérieure (304), ladite partie intérieure (306) étant placée dans la chambre de mélange et ayant des ouvertures radiales (310) pour permettre au fluide de déchet de sortir du tube d'alimentation, dans lequel ladite portion intérieure (306) est liée de manière pivotante à ladite partie extérieure (304) de sorte que ladite turbine (60) et la partie intérieure (306) toutes deux pivotent.
